# DEMANDE DE BREVET EUROPEEN

(11) **EP 1 420 361 A1**
(43) Date de publication de la demande: **19.05.2004**
(21) Numéro de dépôt: 03292820.2
(22) Date de dépôt: 14.11.2003
(51) Int. Cl.: G06K 17/00

(54) **Machine à haute cadence de personnalisation de module à circuit intégré**

(30) Priorité: 15.11.2002 FR 0214325
(71) Demandeur: Smartware, 92160 Antony (FR); SITECH, 45430 Mardie (FR)
(72) Inventeur: Medioni, Stéphane, 92160 Antony (FR); Ormerod, Simon, 45430 Mardie (FR)
(74) Mandataire: Debay, Yves

(57) **Abrégé**

La présente invention concerne une machine à haute cadence de personnalisation (2) de modules à circuit intégré (51₀, ..., 51ₙ) monté sur un ruban de film (5) comportant :
- une roue de personnalisation tournante contre laquelle est plaqué le ruban de film ;
- des moyens d'établir, sur au moins une portion de la roue de personnalisation (1) tournante, une communication avec le circuit intégré, et
- des moyens de positionnement et d'entraînement (61, 62, 63, 64, 65) du ruban de film en synchronisme avec la rotation de la roue de personnalisation (1).

## Description

La présente invention concerne une machine à haute cadence de personnalisation de module à circuit intégré.

Par module à circuit intégré, on entend un circuit intégré comprenant un microprocesseur associé à au moins une mémoire ou un ensemble de mémoires associées à un circuit séquenceur, et réalisé dans une puce de circuit intégré, ladite puce de circuit intégré étant rendue solidaire d'un substrat constitué d'un film comportant, soit des plages de contacts permettant de réaliser les connexions nécessaires avec le circuit intégré, soit des antennes permettant une communication sans contact avec le circuit intégré.

Il est connu des machines de personnalisation pour cartes à circuit intégré qui permettent la personnalisation de cartes en matière plastique dans lesquels sont enchâssés des modules tels que ceux décrits précédemment. Toutefois, ces divers systèmes traitent les cartes les unes après les autres, et ne peuvent pas atteindre des cadences très élevées.

Ainsi le brevet US 4, 827, 425 enseigne un système à tourniquet comportant une ligne d'introduction des cartes et une ligne d'extraction des cartes, ces lignes étant radiales par rapport au tourniquet et la carte introduite effectuant une rotation quasi-complète pour atteindre la sortie. La durée de rotation et la taille du tambour sont étudiées pour que les systèmes électroniques aient le temps d'effectuer les opérations de personnalisation sur la carte. Ceci nécessite des machines relativement encombrantes, compte tenu de la taille des tambours qui doivent être assez grands pour permettre de disposer d'un grand nombre de stations de personnalisation. En outre, ces opérations nécessitent un laps de temps relativement élevé. Avec un tel dispositif, il faut entre dix et soixante secondes pour programmer le circuit intégré, ce qui limite les cadences de personnalisation. Par ailleurs, ces dispositifs de personnalisation étant volumineux, ils s'intègrent difficilement dans une chaîne de fabrication continue.

De même, la demande de brevet EP 0 256 921 concerne un système de personnalisation de cartes par lot, traitant une pile de cartes et introduisant les cartes dans des fentes de personnalisation. Cette machine nécessite de contrôler des déplacements selon deux directions perpendiculaires et ne peut donc assumer des cadences élevées de production.

Enfin, il est connu par la demande de brevet EP 1 076 314, une machine de personnalisation linéaire qui peut s'intégrer facilement dans une chaîne de transfert, ou encore par le brevet français 2 766 945, une machine de personnalisation à tambours qui peut se disposer dans le cheminement d'une ligne de transfert permettant l'acheminement des cartes aux différents postes de fabrication. Toutefois, dans ces systèmes comme dans les systèmes précédents, en dehors des cadences plus ou moins élevées, ces systèmes présentent l'inconvénient de devoir envoyer au rebut l'ensemble cartes-plastiques-boutons, lorsque l'opération de personnalisation n'a pas fonctionné correctement. Cela induit des problèmes de récupération des matériaux et de retraitement des déchets.

Il est également connu par le « IBM Technical Disclosure Bulletin », mai 1991 Vol 33 N° 12 pages 251 à 259, un article intitulé « High-Speed Opens And Shorts Substrate Tester » qui enseigne un dispositif de test de substrat de circuit intégré, ou de cartes de circuit imprimé, pour détecter les court-circuits et les lignes non-conductrices. Un tel dispositif utilise un bras-robot qui place dans des pochettes d'une courroie transporteuse les substrats, lesquels sont acheminés vers une station de test pour être positionnés selon quatre points et une sonde est ensuite descendue pour établir les contacts avec des points déterminés du substrat et effectuer les tests. Lorsque le test est achevé, l'échantillon testé est classé en une des catégories suivantes : accepté, rejeté, à retraiter ou à retester. La tête de test est élevée et descendue à chaque opération pour permettre l'introduction de l'échantillon à tester puis, après la descente, d'effectuer le test, puis enfin, après le test, la tête remonte. Ce mouvement de va et vient de la tête est préjudiciable à la cadence de la machine, et peut également, si on augmente trop la cadence, occasionner des détériorations, soit des aiguilles de contact de la tête, soit des zones testées sur l'échantillon.

Le but de l'invention est de proposer une machine à haute cadence de personnalisation de modules à circuit intégré qui ne présente pas un ou plusieurs des inconvénients précédemment cités.

Ce but est atteint par le fait que la machine à haute cadence de personnalisation de modules à circuit intégré monté sur un ruban de film comporte :
- une roue de personnalisation tournante contre laquelle est plaqué le ruban de film ;
- des moyens d'établir, sur au moins une portion de la roue de personnalisation tournante, une communication avec le circuit intégré, et
- des moyens de positionnement et d'entraînement du ruban de film en synchronisme avec la rotation de la roue de personnalisation.

Selon une autre particularité, les moyens d'entraînement et de positionnement du ruban sont constitués de deux roues à picots et d'une courroie de plaquage entourant au moins partiellement la roue tournante de personnalisation.

Selon une autre particularité, la roue de personnalisation est polygonale.

Selon une autre particularité, les moyens d'établir une communication avec le circuit intégré sont constitués lorsque le ruban du film comporte une plage de contacts établissant les liaisons entre une surface du film et le circuit intégré par des aiguilles de contact, ou lorsque le ruban de film comporte, sur une de ses faces, une ou plusieurs antennes permettant d'établir une communication avec le circuit intégré par une ou plusieurs antennes réalisées dans la tête de connexion mise en place dans la portion de roue de personnalisation.

Selon une autre particularité, la roue de personnalisation comporte une pluralité de têtes de communication mises en place à des intervalles réguliers sur la roue de personnalisation, la distance entre les têtes de communication correspondant à la distance entre les moyens de communication réalisés sur le ruban de film et associée à deux circuits intégrés différents.

Selon une autre particularité, la roue de personnalisation est extractible de manière à s'adapter rapidement à la typologie du film ou au pas entre les modules comportant les circuits intégrés.

Selon une autre particularité, la machine comporte des cartes électroniques reliées par une liaison adaptée aux têtes de connexion.

Selon une autre particularité, les têtes de connexion sont mixtes.

Selon une autre particularité, les têtes de connexion sont en contact.

Selon une autre particularité, les têtes de connexion sont de type de connexion sans contact.

Selon une autre particularité, la roue de personnalisation possède une came fixe excentrée en rotation par rapport au tambour.

Selon une autre particularité, les têtes de connexion sont montées sur des ensembles mobiles radialement.

Selon une autre particularité, les têtes de connexion sont rétractées pendant la période où il n'y a pas contact et jusqu'à ce que le contact se fasse à nouveau.

Selon une autre particularité, chaque carte électronique est reliée par une interface à un connecteur tournant et par une liaison de communication en série à un ordinateur gérant l'ensemble des personnalisations, l'envoi des paramètres de personnalisation vers chaque module et le processus de fabrication en aval de la personnalisation en fonction des tests effectués en sortie de personnalisation pour déterminer l'utilisation ou le rebut du module personnalisé.

Selon une autre particularité, la machine incorpore une carte de test permettant de tester, en fin de cycle de personnalisation, chaque module personnalisé pour déterminer si ce circuit intégré associé doit être utilisé ou envoyé au rebut.

L'autre but de l'invention est de proposer un procédé de fabrication de cartes à module de circuit intégré permettant d'augmenter les cadences de fabrication et de diminuer les rebuts.

Ce but est atteint par le fait que le procédé de fabrication incorpore une machine à haute cadence de personnalisation de circuits intégrés selon l'invention suivie d'une station de découpe des modules comportant les circuits intégrés et d'une station d'acheminement des modules vers une station d'insertion des modules dans des cartes en matière plastique pourvues d'un logement d'insertion du module.

Selon une autre particularité, le module découpé est envoyé vers une station de rebut.

Selon une autre particularité, la ligne de fabrication des cartes plastiques comporte une étape de personnalisation du plastique par gravure ou embossage ou impression des informations de personnalisation correspondant aux informations de personnalisation définies dans un des circuits intégrés, une étape de repérage du circuit intégré comportant des informations de personnalisation déterminées et une étape de détermination de la personnalisation à effectuer sur le plastique en fonction de l'avancement du module comportant le circuit intégré pour que celui-ci soit inséré dans le plastique comportant la personnalisation correspondante.

Selon une autre particularité, le processus comprend l'étape de personnalisation du plastique après l'insertion du module personnalisé dans le plastique.

D'autres particularités et avantages de la présente invention apparaîtront plus clairement à la lecture de la description ci-après, dans lesquels :
- la figure 1 représente une vue de face et en élévation de la machine de personnalisation ;
- la figure 2 représente une vue de côté des cartes 1 à n découpées de la machine de personnalisation ;
- la figure 3 représente une vue de dessus des films utilisés par la machine de personnalisation ;
- la figure 4 représente une vue schématique du plaquage du film par la courroie sur la roue de personnalisation ;
- la figure 5 représente une vue schématique de la connexion d'une carte SIM au ruban de film ;
- la figure 6 représente une vue schématique d'un processus de fabrication en chaîne utilisant une machine à haute cadence de personnalisation de module ;
- selon une première variante de réalisation, la figure 7 représente un deuxième mode de réalisation d'une chaîne de fabrication utilisant une machine de personnalisation selon l'invention.

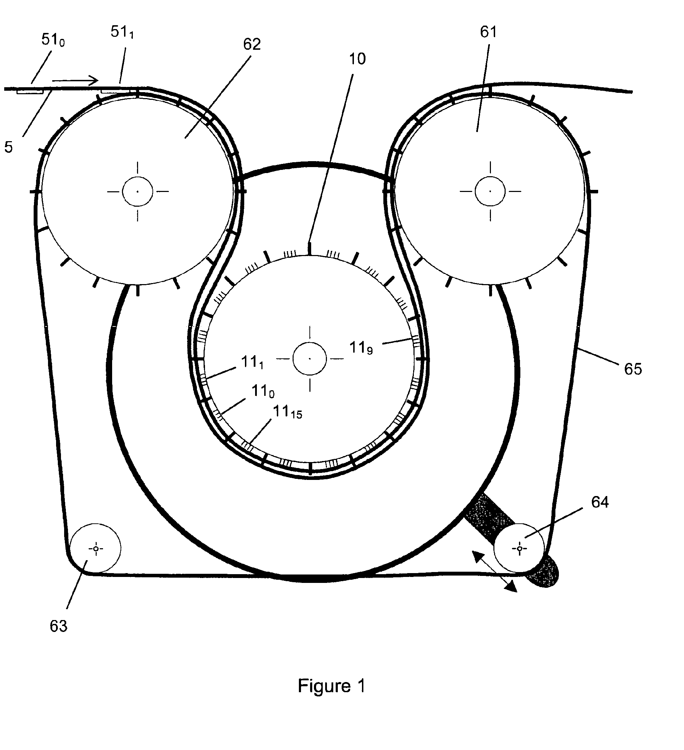

La présente invention va maintenant être décrite à l'aide des figures 1 à 6.

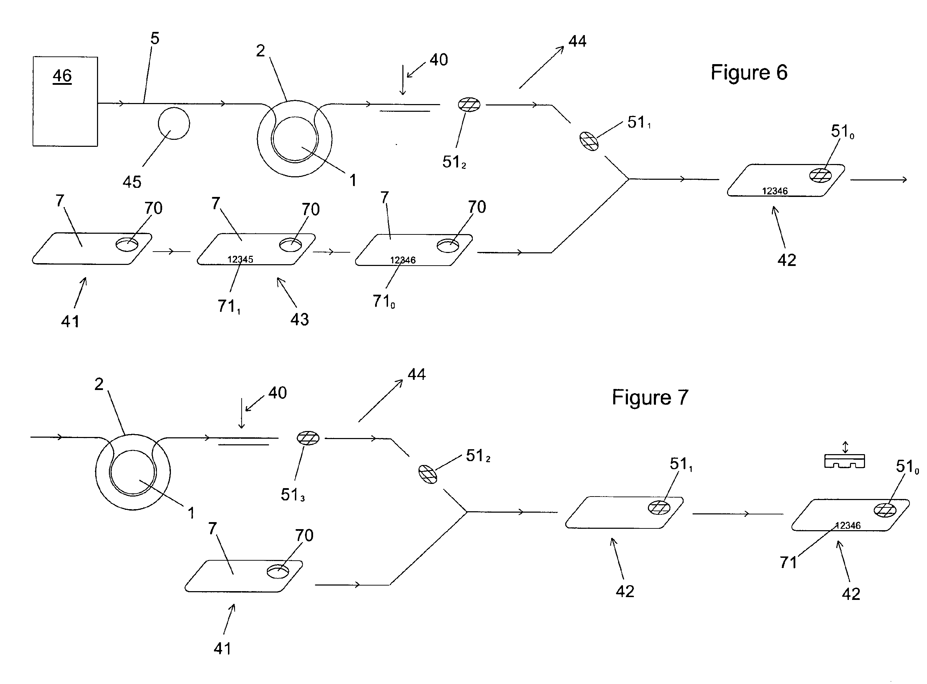

L'invention est particulièrement utile pour personnaliser des puces ou circuits intégrés, et en particulier des modules comportant l'association du circuit intégré avec un moyen de connexion du circuit intégré au monde extérieur. Ce moyen de connexion est constitué, soit par des contacts dont les plages de contact sont reliées chacune par des conducteurs aux entrées du circuit intégré, soit par une ou plusieurs antennes pour établir une communication sans contact par ondes hertziennes ou électromagnétiques avec une autre antenne reliée à un terminal ou à une machine. Le module peut être également mixte et comporter à la fois un moyen de connexion par contact au monde extérieur ou/et un moyen de connexion sans contact à ce même monde extérieur. Les modules (50) sont en général constitués par l'association de circuits intégrés en semi-conducteurs (51₀, ..., 51n), recouverts de résine (8), rendus solidaires d'une face d'un film (5) souple dont l'autre face porte par exemple des plages de contact (52), ces plages de contact (52) étant reliées au circuit intégré par des fils de liaison ou par des billes de soudure ou encore par tout autre moyen. Ceci réalise un module (50) à contact. Le film peut comporter également sur une face, une ou plusieurs antennes reliées par un moyen électrique à certaines entrées du circuit intégré pour constituer, soit un module mixte si celui-ci comporte également une liaison par contact, soit un module sans contact si celui-ci ne comporte pas les liaisons par contact. La taille des boutons (50) étant suffisamment faible, on dispose en général sur un film deux pistes parallèles de plages de contact (52 _{0d}, 52 _{1d}, 52 _{0g}, 52 _{1g}). Les modules (50) ainsi réalisés sont ensuite découpés par une machine de découpe (40, figure 6) pour être insérés dans les supports plastiques du format d'une carte de crédit pour constituer ce que l'on appelle des cartes intelligentes (smartcards), utilisées pour délivrer des services bancaires ou de sécurité sociale, ou encore dans des supports plastiques dont une partie est sécable pour constituer un module SIM utilisé dans l'industrie du téléphone portable pour constituer le moyen sécuritaire du portable et de la liaison.

Le film (5) porteur des modules (50) est acheminé par un moyen de convoyage (45, figure 6) de la sortie d'une machine (46) d'implantation des puces sur le film vers l'entrée de la machine de personnalisation représentée à la figure 1.

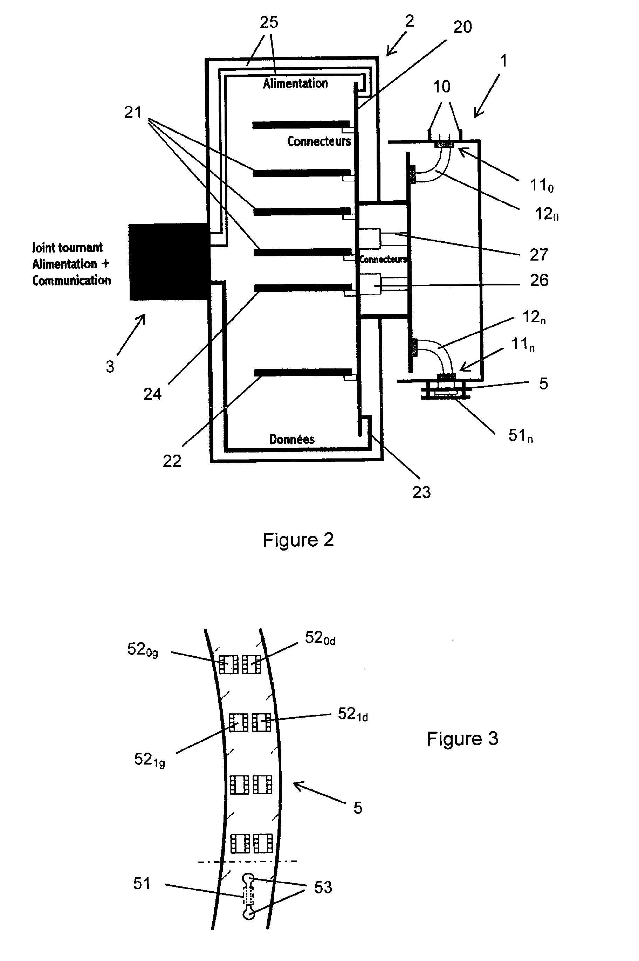

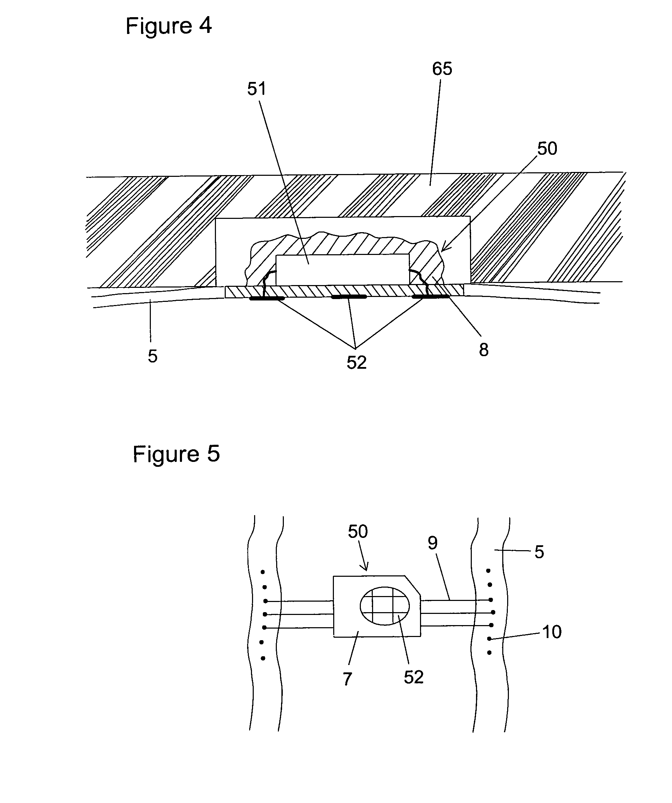

La machine de personnalisation (2) est constituée d'au moins un tambour (1) de faible diamètre par rapport à un deuxième tambour ou boîtier (2) dans lesquels sont montés les circuits électroniques de gestion et d'interfaçage des têtes de connexion (11₀, ..., 11ₙ) montées à la périphérie du tambour (1) de façon que les connecteurs constitués d'une pluralité d'aiguilles montées sur des moyens élastiques puissent entrer en contact avec les plages de contact du film (5) et que les antennes (non représentées) de ces moyens de connexion (11₀, ..., 11ₙ) soient en mesure d'établir une liaison avec les antennes (53) du module (50) formé sur le film. Comme on peut le voir sur la figure 1, la roue de tête de connexion comporte une pluralité de têtes de connexion (11₀, ..., 11ₙ) et son diamètre est étudié en fonction de la taille des modules (50), mais elle est de taille bien inférieure au diamètre habituel de machines de personnalisation telles que celles enseignées par l'art antérieur du brevet US 4, 627, 425 ou du brevet FR 2 766 945. La machine de personnalisation (2) comporte également un moyen (61, 62, 63, 64, 65) permettant de plaquer le film avec le module (50) orienté de façon adéquate par rapport à la roue de tête de connexion, pour que les circuits intégrés (51) entrent en communication chacun avec une tête de connexion (11₀, ..., 11ₙ) de la roue de personnalisation, pendant une trajectoire commune partiellement avec celle de la roue de personnalisation, et suffisante pour permettre, pendant cette phase de contact, la personnalisation du circuit intégré. Ainsi de façon non limitative, comme représenté sur la figure 1, le circuit intégré (51₁) entre en contact avec la tête de connexion (11₁), va suivre la rotation de la tête jusqu'au moment ou la tête de connexion (11₁) sera arrivée à la position correspondant à la tête de connexion (11₉) sur la figure 1. A ce moment là, le contact ou la liaison électrique entre le circuit intégré et la tête de connexion s'interrompra. Les moyens d'assurer la liaison et le déplacement synchrone du film avec la tête de connexion sont constitués, par exemple, de picots (10) portés par la roue de la tête de connexion et d'une courroie (65) tendue par un galet de tension (64) réglable pour permettre le plaquage du film avec une force suffisante pour que les aiguilles des têtes de connexion à contact assurent un contact permettant une bonne liaison électrique. Il est bien évident que ce mode de réalisation n'est pas limitatif et que l'on peut très bien envisager un mode de réalisation où les picots seraient supprimés et l'entraînement serait réalisé simplement par friction en instaurant une pression de plaquage du film par la courroie (65), pourvue, comme le montre la figure 4, de cavités ou de surépaisseurs pour absorber l'épaisseur du circuit intégré (51) et de la résine (8), sur la roue de personnalisation, suffisante pour éviter un glissement du circuit intégré (51 ) par rapport aux têtes de connexion (11). Un autre mode de réalisation propose d'intégrer une came à la roue de personnalisation. Cette came est fixe, excentrée, et en rotation par rapport au tambour (1). Les têtes de connexion (11₀, ..., 11ₙ) sont alors montées sur des ensembles mobiles radialement, et sont donc sollicitées par des moyens élastiques vers l'axe de rotation pour venir s'adapter au profil de la came. On remarquera, dans le mode de réalisation de la figure 1, que les roues (62, 61) servent à l'entraînement du film, et également à l'entraînement en synchronisation de la courroie de plaquage du film. Les picots ont l'avantage de permettre un bon centrage du film et, par conséquent, des modules (50) par rapport à la position des têtes de connexion (11₀, ..., 11ₙ) sur la roue de personnalisation. Comme dans les autres machines de personnalisation, chacune des têtes de connexion (11₀, ..., 11ₙ) est reliée par des conducteurs (12₀, ..., 12ₙ) à une carte principale de circuit imprimé (20) à laquelle sont reliées d'autres cartes (21) de commande et de contrôle de chacune des têtes de connexion (11₀, ..., 11ₙ). Chacune des cartes (21) contrôle une ou plusieurs têtes de connexion (11₀, ..., 11ₙ) et reçoit les données par un bus (23) relié, d'une part, au bus de la carte principale (20) et, d'autre part, à un joint tournant (3) recevant l'alimentation de l'ensemble et la communication des informations en série provenant d'un système informatique gérant la personnalisation de la chaîne de fabrication. Le joint tournant (3) fournit également par les conducteurs (25) une alimentation à l'ensemble électronique constitué par les cartes (21, 22) et les têtes de connexion. Une carte (22) sert de testeur de module à contact ou sans contact et permet de s'assurer, avant que le module ait quitté la zone où il était en liaison avec la tête de personnalisation, que la personnalisation s'est produite correctement et que le module (50) est opérationnel. Enfin le boîtier électronique de la machine de personnalisation peut comporter également une carte sécuritaire, à mémoire, (24) dite carte-mère dont la fonction est de fournir les informations sécuritaires nécessaires à la personnalisation. La machine comporte également un système de comptage et de repérage de chacun des modules, pour, en fonction des résultats de personnalisation obtenus par la carte-test (22), envoyer l'information à un système central de gestion de la ligne de production qui déterminera si le circuit intégré (par exemple 51₂ sur la figure 6) doit être envoyé au rebut (44). Dans le mode de réalisation de la figure 2, le premier boîtier (1) et le second boîtier (2) sont cylindriques et entraînés en rotation, et font la liaison de communication avec le système informatique de gestion de la chaîne de fabrication, établissant une liaison en série pourvue d'un joint tournant (3). Toutefois la technologie pouvant évoluer, il pourrait très bien être envisagé de laisser le boîtier de gestion des têtes fixes d'établir une liaison tournante entre le boîtier de gestion (2) et la tête tournante (1 ). Dans ce cas, la tête tournante (1) incorporerait simplement un circuit de sérialisation et de dressage des informations circulant entre les têtes tournantes et les circuits électroniques de gestion incorporés dans le boîtier. Un autre mode de réalisation propose des moyens de montage permettant d'avoir des roues extractibles. La roue (1) vient se connecter directement sur les connecteurs femelles (27). Les connecteurs mâle et femelle (26 et 27) offrent donc la possibilité de débrancher la roue (1) afin d'en placer une autre.

La machine de personnalisation représentée sur les figures 1 et 2, pourra être utilisée dans une chaîne de fabrication de cartes portables incorporant un circuit intégré (51) selon la variante de la figure 6 en prévoyant un poste de formage (41) des supports plastiques (7) pourvus d'une alvéole (70) destinée à la réception du module (50). La chaîne se poursuit par un poste d'embossage ou d'impression (43), sur le plastique, pour marquer les informations visibles (71₀, 71₁) correspondant aux informations respectives inscrites sur les modules (51₀, 51₁). Ainsi, le module comportant le circuit intégré (51₀), après avoir été découpé (40), sera associé avec la carte portant les informations (71₀). La chaîne de fabrication des supports plastiques incorpore donc un système de comptage et de repérage de la position des objets, pour approvisionner le plastique personnalisé en synchronisme avec le bouton personnalisé portant les informations correspondant aux informations portées par le plastique. Le bouton ou module comportant le circuit intégré (51₀) est ensuite inséré dans l'évidement (70) du support plastique (7) au poste (42) par une opération classique pour l'homme de métier.

Un autre mode de réalisation de l'invention est représenté à la figure 7. Dans ce mode, les supports plastiques (7) sont associés directement avec les modules en sortie de l'opération de découpage (40) et de l'opération d'élimination des rebuts (44), la chaîne de fabrication comportant un système de repérage de chacun des modules de façon à permettre, après le poste d'insertion (42), d'effectuer une personnalisation (43) du plastique correspondant à la personnalisation reçue par le module inséré dans la carte.

Un autre mode de réalisation de l'invention est représenté à la figure 5. Cette figure montre la connexion des cartes micro SIM au ruban de film (5) avant leur passage par la roue de personnalisation (1). Cette connexion se fait par l'intermédiaire de liens en matériau insécable.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Machine à haute cadence de personnalisation (2) de modules à circuit intégré (51₀, ..., 51ₙ) monté sur un ruban de film (5) **caractérisée en ce qu'**elle comporte :
- une roue de personnalisation tournante contre laquelle est plaqué le ruban de film ;
- des moyens d'établir, sur au moins une portion de la roue de personnalisation (1) tournante, une communication avec le circuit intégré (51 ), et
- des moyens de positionnement et d'entraînement (61, 62, 63, 64, 65) du ruban de film (5) en synchronisme avec la rotation de la roue de personnalisation (1).

2. Machine selon la revendication 1, **caractérisée en ce que** les moyens d'entraînement et de positionnement (61, 62, 63, 64, 65) du ruban (5) sont constitués de deux roues à picots (61, 62) et d'une courroie de plaquage (65) entourant au moins partiellement la roue tournante de personnalisation (1).

3. Machine selon la revendication 1 ou 2, **caractérisée en ce que** la roue de personnalisation (1) est polygonale.

4. Machine selon la revendication 1 ou 2, **caractérisée en ce que** les moyens d'établir une communication avec le circuit intégré (51) sont constitués lorsque le ruban (5) du film comporte une plage de contacts (52) établissant les liaisons entre une surface du film et le circuit intégré (51) par des aiguilles de contact, ou lorsque le ruban (5) de film comporte, sur une de ses faces (52), une ou plusieurs antennes permettant d'établir une communication avec le circuit intégré (51) par une ou plusieurs antennes réalisées dans la tête de connexion (11) mise en place dans la portion de roue de personnalisation (1).

5. Machine selon la revendication 4, **caractérisée en ce que** la roue de personnalisation (1) comporte une pluralité de têtes de communication (11₀, ..., 11ₙ) mises en place à des intervalles réguliers sur la roue de personnalisation (1), la distance entre les têtes de communication correspondant à la distance entre les moyens de communication réalisés sur le ruban de film (5) et associée à deux circuits intégrés (51 ₙ) différents.

6. Machine selon la revendication 4 ou 5, **caractérisée en ce que** la roue de personnalisation (1) est extractible de manière à s'adapter rapidement à la typologie du film (5) ou au pas entre les modules comportant les circuits intégrés (51).

7. Machine selon la revendication 4 ou 5, **caractérisée en ce que** la machine comporte des cartes électroniques (21) reliées par une liaison adaptée aux têtes de connexion (11₀, ..., 11ₙ).

8. Machine selon une des revendications 4 à 7, **caractérisée en ce que** les têtes de connexion (11₀, ..., 11ₙ) sont mixtes.

9. Machine selon une des revendications 4 à 7, **caractérisée en ce que** les têtes de connexion (11₀, ..., 11ₙ) sont en contact.

10. Machine selon une des revendications 4 à 7, **caractérisée en ce que** les têtes de connexion (11₀, ..., 11ₙ) sont de type connexion sans contact.

11. Machine selon une des revendications 4 à 7, **caractérisée en ce que** la roue de personnalisation (1) possède une came fixe excentrée en rotation par rapport au tambour.

12. Machine selon une des revendications 4 à 11, **caractérisée en ce que** les têtes de connexion (11₀, ..., 11ₙ) sont montées sur des ensembles mobiles radialement.

13. Machine selon une des revendications 4 à 12, **caractérisée en ce que** les têtes de connexion (11₀, ..., 11ₙ) sont rétractées pendant la période où il n'y a pas contact et jusqu'à ce que le contact se fasse à nouveau.

14. Machine selon une des revendications 7 à 13, **caractérisée en ce que** chaque carte électronique est reliée par une interface à un connecteur tournant et par une liaison de communication en série à un ordinateur gérant l'ensemble des personnalisations, l'envoi des paramètres de personnalisation vers chaque module et le processus de fabrication en aval de la personnalisation en fonction des tests effectués en sortie de personnalisation pour déterminer l'utilisation ou le rebut du module personnalisé.

15. Machine selon une des revendications 1 à 14, **caractérisée en ce que** la machine incorpore une carte de test (22) permettant de tester, en fin de cycle de personnalisation, chaque module personnalisé pour déterminer si le circuit intégré (51₀, ..., 51ₙ) associé doit être utilisé ou envoyé au rebut.

16. Procédé de fabrication de cartes à module de circuit intégré incorporant une machine à haute cadence de personnalisation (1) de circuits intégrés (51₀, ..., 51ₙ) selon une des revendications précédentes, suivie d'une station de découpe (40) des modules comportant les circuits intégrés et d'une station d'acheminement des modules vers une station d'insertion (42) des modules dans des cartes (7) en matière plastique pourvues d'un logement d'insertion (70) du module.

17. Procédé selon la revendication 16, **caractérisée en ce que** le module (50) découpé est envoyé vers une station de rebut (44).

18. Procédé selon la revendication 16 ou 17, **caractérisée en ce que** la ligne de fabrication des cartes plastiques comporte une étape de personnalisation (43) du plastique par gravure ou embossage ou impression des informations de personnalisation (71₀, ..., 71ₙ) correspondant aux informations de personnalisation définies dans un des circuits intégrés (51₀, ..., 51ₙ), une étape de repérage du circuit intégré comportant des informations de personnalisation déterminées et une étape de détermination de la personnalisation à effectuer sur le plastique en fonction de l'avancement du module comportant le circuit intégré pour que celui-ci soit inséré dans le plastique comportant la personnalisation correspondante.

19. Procédé selon la revendication 18, **caractérisée en ce que** le processus comprend l'étape de personnalisation (43) du plastique après l'insertion (42) du module personnalisé dans le plastique (7).
